Europäisches Patentamt

European Patent Office

Office européen des brevets

(11) Numéro de publication: **0 185 642**
**A1**

## (12) DEMANDE DE BREVET EUROPEEN

(21) Numéro de dépôt: **85870159.2**

(22) Date de dépôt: **19.11.85**

(51) Int. Cl.⁴: **B 62 L 3/00**
**B 62 L 1/12, B 62 L 1/16**

(30) Priorité: **23.11.84 BE 214047**

(43) Date de publication de la demande:
**25.06.86 Bulletin 86/26**

(84) Etats contractants désignés:
**AT CH DE FR GB IT LI LU NL SE**

(71) Demandeur: **Neycken, Alain**
**86 ru de Biolley**
**B-4800 Verviers(BE)**

(71) Demandeur: **Crosset, Léon**
**425 Bois les Dames**
**B-4841 Henri-Chapelle(BE)**

(72) Inventeur: **Neycken, Alain**
**86 ru de Biolley**
**B-4800 Verviers(BE)**

(72) Inventeur: **Crosset, Léon**
**425 Bois les Dames**
**B-4841 Henri-Chapelle(BE)**

(74) Mandataire: **Dellicour, Paul**
**Office de Brevets E. Dellicour rue Fabry 18/012**
**B-4000 Liège(BE)**

(54) **Dispositif de commande de freins à cable de transmission.**

(57) Le dispositif comprend une poulie de renvoi (11) couplée aux organes de freinage (1A, 1B) ladite poulie (11) étant montée en sorte d'être entraînée en réponse à un ordre de freinage appliqué au câble de transmission (3), afin de produire un effort de commande proportionnel et supérieur à la sollicitation représentant l'ordre de freinage et d'appliquer cet effort de commande aux organes de freinage (1A, 1B).

FIG. 1

EP 0 185 642 A1

## Dispositif de commande de freins à câble de transmission

La présente invention concerne des perfectionnements aux freins à câble de transmission, en particulier les freins à sabots équipant les cycles.

La puissance de freinage comme aussi la progression douce du freinage laissent souvent à désirer sur les cycles, ce qui constitue un risque de danger pour la sécurité. Aussi l'invention vise-t-elle à apporter des perfectionnements aux freins à sabots, et d'une façon générale aux freins commandés par câble de transmission, afin d'améliorer la capacité de freinage tout en assurant une progression douce du freinage jusqu'à son effet maximal.

L'invention est basée sur l'application du principe de renvoi de câble par poulie aux dispositifs de commande de freins à câble de transmission.

Le dispositif selon l'invention se caractérise par une poulie de renvoi couplée aux organes de freinage, la dite poulie étant montée en sorte d'être entraînée en réponse à un ordre de freinage appliqué au câble de transmission afin de produire un effort de commande proportionnel et supérieur à la sollicitation représentant l'ordre de freinage et d'appliquer cet effort de commande aux organes de freinage.

Dans un premier mode d'exécution la poulie de renvoi
est montée sur un levier solidaire d'une mâchoire, le
câble de transmission s'enveloppant autour de la poulie
avec son extrémité ancrée sur une pièce de support rendue
solidaire de l'autre mâchoire, la gaine dudit câble de
transmission s'appuyant contre une butée montée sur la
pièce de support de telle manière que lorsqu'une traction
est exercée sur le câble de transmission par son extrémité
extérieure, la poulie et ladite pièce de support se
rapprochent en faisant pivoter les mâchoires autour de
leur pivot.

Dans un deuxième mode d'exécution, la poulie de renvoi est
montée sur le cadre de la machine, le câble de transmission
ayant son extrémité connectée à une première mâchoire, la
gaine dudit câble de transmission s'appuyant contre une
butée montée sur une pièce de support et un câble de
réaction s'enveloppant autour de la poulie a une extrémité fixée à ladite pièce de support et a son autre
extrémité connectée à la deuxième mâchoire, de telle
manière que lorsqu'une traction est exercée sur le câble
de transmission par son extrémité extérieure, ladite
pièce de support exerce un effort de traction sur le câble
de réaction qui entraîne la poulie en faisant pivoter la
mâchoire correspondante tandis que la première mâchoire
pivote sous l'effet de la traction exercée par le câble
de transmission.

Suivant un autre aspect de l'idée inventive, l'invention
propose un dispositif de transmission destiné à être
aisément couplé à un dispositif de freins à câble de
transmission existant, ce dispositif de transmission
se caractérisant par une pièce de support formée avec
un passage pour le câble de transmission, l'extrémité de ce câble se trouvant ancrée sur ladite pièce de support
après avoir enveloppé une poulie de renvoi, l'axe de ladite poulie étant connecté à un câble de commande des organes de freins. L'invention propose également une variante
à cette réalisation.

L'invention est exposée plus en détail dans ce qui suit
sur quatre exemples d'exécution illustrés sur les dessins
ci-annexés.  Dans ces dessins :
- la figure 1 montre un premier exemple d'exécution d'un
dispositif selon l'invention en état de repos ;
- la figure 2 montre une partie du dispositif de la figure 1 en état de travail ;
- la figure 3 montre un deuxième exemple d'exécution d'un
dispositif selon l'invention en état de repos ;
- la figure 4 montre le dispositif de la figure 3 en état
de travail ;
- les figures 5 et 7 représentent deux exemples d'exécution
d'un dispositif selon l'invention, en état de repos, destiné à être accouplé à un dispositif de freins à câble de
transmission existant ;
- la figure 6 montre le dispositif de la figure 5 en état
de travail ;
- la figure 8 montre une coupe par 8-8 de la figure 7.

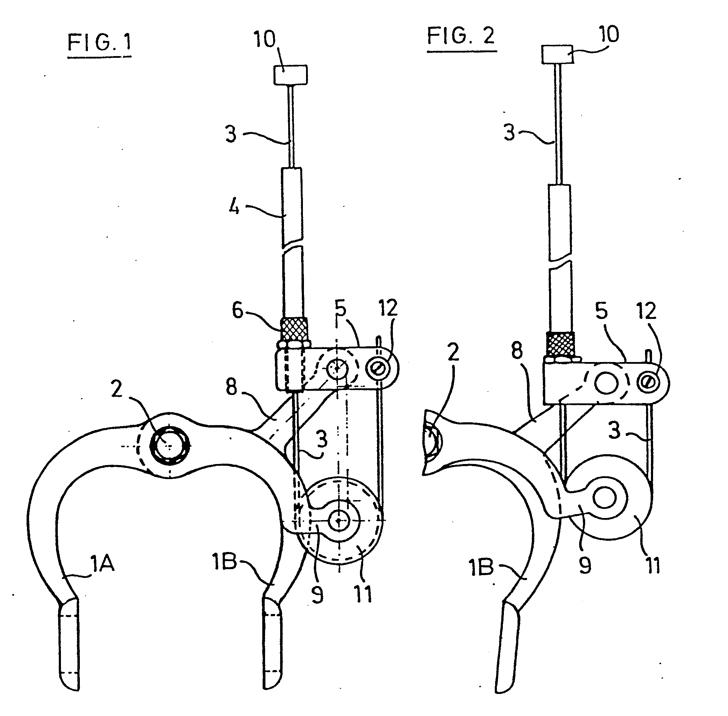

Se reportant aux dessins ci-annexés, la figure 1 montre
un mode d'exécution d'un dispositif de freins à mâchoires
et câble de transmission.  Les mâchoires 1A et 1B sont
articulées autour d'un pivot commun 2.  Le câble de transmission est désigné par la référence 3 et est connecté
à une extrémité à un dispositif d'application de l'ordre
de freinage représenté par le rectangle noté 10.  Une des
mâchoires, la mâchoire 1B sur la figure 1, est formée
avec un levier 8 à l'extrémité duquel est articulée une
pièce de support 5 présentant un passage pour le câble de transmission 3. Ledit passage est aménage avec une butée 6 sur laquelle s'appuie la gaine 4 du câble de transmission 3. La seconde mâchoire 1A sur la figure 1, se termine par un court levier 9 à l'extrémité duquel est montée une poulie de renvoi 11 autour de laquelle s'enveloppe le câble de transmission 3 après avoir traversé le passage dans la pièce de support 5. L'extrémité du câble 3 est ancrée en 12 sur la pièce de support 5.

Lorsque la commande 10 des freins se trouve actionnée, le câble 3 est tiré vers le haut sur la figure 1 et, ce faisant, la poulie 11 et la pièce de support 5 se rapprochent (figure 2). Cela a pour effet de faire pivoter les mâchoires 1A, 1B autour de leur axe de pivotement 2 et de rapprocher ainsi l'une de l'autre leurs extrémités portant les sabots de freins. L'effet du freinage ainsi obtenu est de 75 à 100% accru par rapport au freinage produit par action directe du câble de transmission sur les mâchoires comme dans les dispositifs de freins existants.

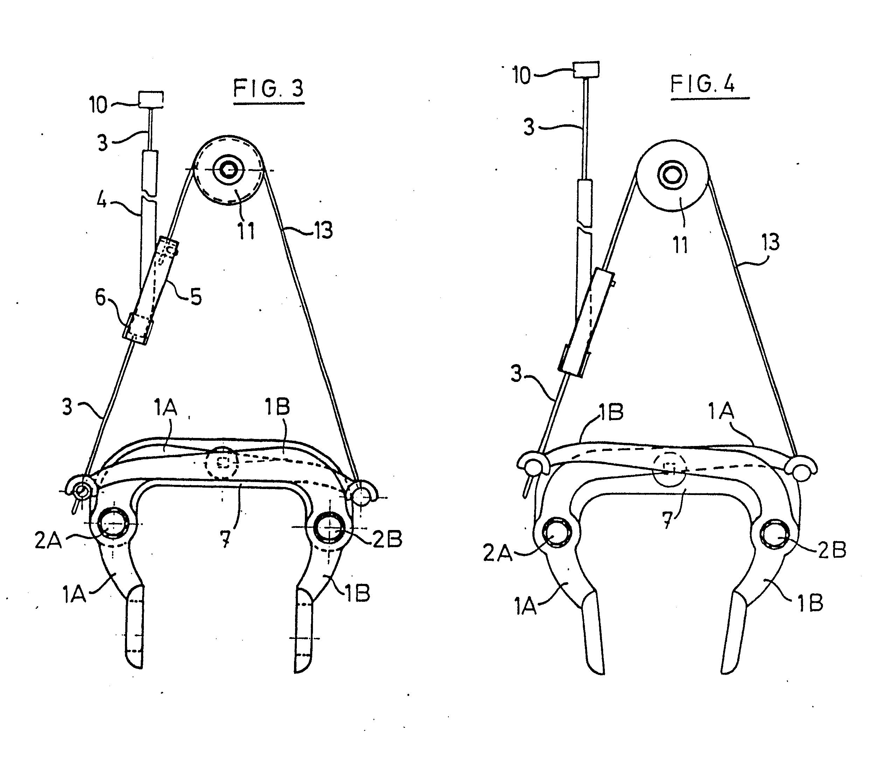

La figure 3 montre un autre mode d'exécution de dispositif de freins à mâchoires et câble de transmission. Dans ce mode d'exécution chacune des deux mâchoires 1A et 1B est articulée autour d'un pivot distinct 2A et 2B; ces pivots sont fixés sur un étrier 7 fixé sur le cadre de la machine. A l'extrémité d'une des mâchoires, la mâchoire 1B sur la figure 3, est ancrée l'extrémité du câble de transmission 3 qui traverse un passage dans une pièce de support 5. La gaine 4 du câble 3 s'appuie sur une butée 6 aménagée sur la pièce de support 5. A l'extré-mité de l'autre mâchoire, 1A sur la figure 3, est ancrée l'extrémité d'un câble de réaction 13 qui s'enveloppe autour d'une poulie de renvoi 11 fixée au cadre de la machine; l'autre extrémité du câble de réaction 13 est fixée à la pièce de support 5.

Lorsque la commande 10 des freins se trouve actionnée, le câble de transmission 3 est tiré vers le haut ( figure 4) et, ce faisant, il exerce une traction sur l'extrémité de la mâchoire 1B. La gaine 4 du câble 3 appuyant par réaction sur la butée 6, la pièce de support 5 exerce une traction sur le câble de réaction 13 et celui-ci, à son tour, exerce une traction sur l'extrémité de la mâchoire 1A. La traction exercée simultanément sur les mâchoires 1A et 1B a pour effet de faire pivoter les mâchoires autour de leurs pivots 2A et 2B et de rapprocher ainsi l'une de l'autre les extrémités des mâchoires qui portent les sabots de freins (figure 4).

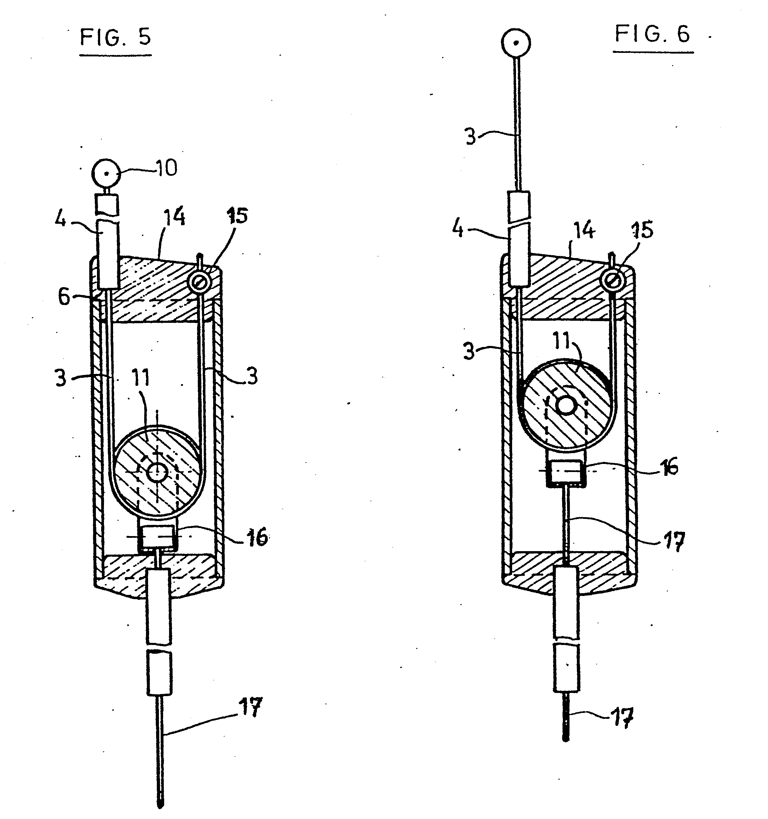

Le mode d'exécution montré à la figure 5 représente un dispositif de transmission selon l'invention destiné à être couplé à un dispositif de freins à câble de transmission existant. Le dispositif de transmission de la figure 5 comprend une pièce de support 14 formée avec un passage pour le câble de transmission 3 venant de la commande de freinage 10 et une butée 6 pour la gaine 4 dudit câble. L'extrémité du câble 3 est ancrée en 15 sur la pièce de support 14 après avoir enveloppé une poulie de renvoi 11. L'axe de la poulie 11 est couplé par un moyen d'accrochage 16 à un câble de commande 17 connecté à une mâchoire de freins. Le fonctionnement de ce dispositif de transmission en réponse à un ordre de freinage appliqué au câble de transmission 3 est en tous points semblable au fonctionnement des organes équivalents du mode d'exécution de la figure 1. La figure 6 montre l'état du dispositif en réponse à un ordre de freinage. La poulie 11 est déplacée vers le haut et exerce une traction sur le câble de commande 17 qui entraîne la mâchoire à laquelle il est connecté. Ce mode de réalisation permet l'adaptation aisée et à moindre frais d'un dispositif de freins à câble de transmission existant en vue d'en améliorer très sensiblement les performances.

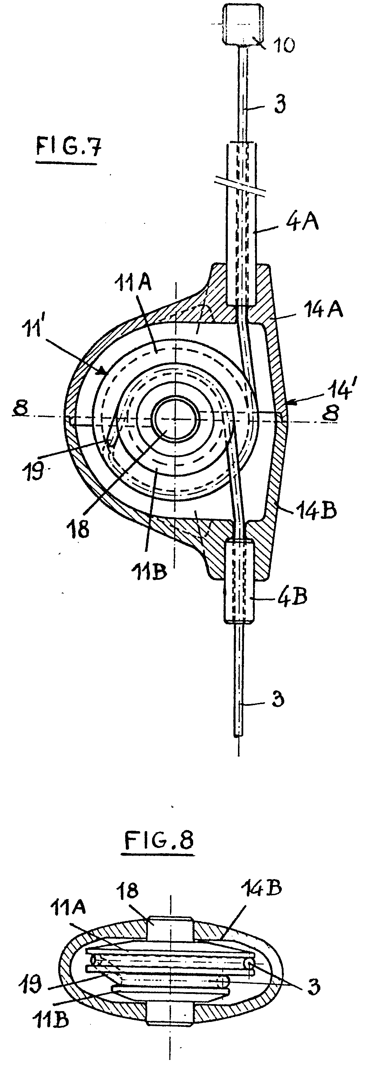

Dans le cas de l'adaptation de l'invention à un dispositif de freins à câble de transmission existant on a représenté à la figure 7 une variante d'exécution. Le dispositif de transmission de la figure 7 comprend aussi une pièce de support ou boîtier 14' mais celui-ci se compose de deux pièces identiques 14A et 14B, lesquelles sont formées chacune avec un passage pour le câble de transmission 3 venant de la commande de frein par l'intermédiaire de la nipple 10 et avec une butée, respectivement pour la gaîne 4A de la pièce de support 14A et pour la gaine 4B de la pièce de support 14B. Ces deux gaînes 4A, 4B servent de guide au câble 3, dont l'extrémité opposée à la nipple 10 constitue le câble de commande et est raccordée au dispositif de freinage. Le boîtier de support 14' renferme une double poulie de renvoi 11' pouvant tourner avec son axe 18 à l'intérieur dudit boîtier. La double poulie 11' (figure 8) est constituée dè deux poulies 11A, 11B de diamètres différents ainsi que d'un passage 19 permettant au câble 3 de passer d'une poulie sur l'autre.

Lorsque la commande 10 des freins se trouve actionnée, le câble de transmission 3 est tiré vers le haut et ce faisant il exerce une action sur la poulie 11A et, du fait du passage 19, sur la poulie 11B pour transmettre son effort à l'extrémité dudit câble commandant le dispositif de freinage. Dans cette réalisation l'effort de freinage est multiplié par le rapport des poulies 11A/11B, la différence de l'effort entre l'entrée et la sortie étant repris par l'adhérence du câble 3 sur la double poulie 11'.

Tous les modes d'exécution décrits dans ce qui précède ont pour point commun la présence d'une poulie de renvoi couplée aux organes d'entraînement des mâchoires et montée en sorte d'être entraînée en réponse à un ordre de freinage appliqué au câble de transmission, afin de transmettre un effort de commande proportionnel et supérieur à la sollicitation appliquée au câble de transmission et d'appliquer cet effort de commande aux mâchoires de freins.

Il est bien entendu que l'invention peut s'appliquer à des modes d'exécution de dispositifs de freins autres que ceux qui sont décrits dans ce qui précède et sont illustrés à titre d'exemple sur les dessins ci-annexés, pourvu qu'ils comportent une poulie de renvoi.

REVENDICATIONS

1. Dispositif de commande de freins à câble de transmission comprenant des organes de freinage (1A, 1B) articulés autour d'un ou deux pivots (2A, 2B) et un câble de transmission (3) pour transmettre l'ordre de freinage,
caractérisé en ce qu'il comprend en outre une poulie de renvoi (11) couplée aux organes de freinage, ladite poulie (11) étant montée en sorte d'être entraînée en réponse à un ordre de freinage appliqué au câble de transmission (3) afin de produire un effort de commande proportionnel et supérieur à la sollicitation représentant l'ordre de freinage et d'appliquer cet effort de commande aux organes de freinage (1A, 1B).

2. Dispositif selon la revendication 1, caractérisé en ce que la poulie de renvoi (11) est montée sur un levier (9) solidaire d'une mâchoire (1A), le câble de transmission (3) s'enveloppant autour de la poulie (11) avec son extrémité ancrée (12) sur une pièce de support (5) rendue solidaire (8) de l'autre mâchoire (1B), la gaine (4) dudit câble de transmission (3) s'appuyant contre une butée (6) montée sur la pièce de support de telle manière que lorsqu'une traction est exercée sur le câble de transmission 3 par son extrémité extérieure, la poulie (11) et ladite pièce de support (5) se rapprochent en faisant pivoter les mâchoires autour de leur pivot(2).

3. Dispositif selon la revendication 1, caractérisé en ce que la poulie (11) est montée sur le cadre de la machine, le câble de transmission (3) ayant son extrémité connectée à un premier organe de freinage(1B), la gaine (4) dudit câble de transmission (3) s'appuyant contre une butée (6) montée sur une pièce de support (5), et en ce qu'un câble de réaction (13) s'enveloppant autour
de la poulie (11) a une extrémité fixée à ladite pièce de
support (5) et a son autre extrémité connectée à un deuxième organe de freinage (1A) de telle manière que lorsqu'une traction se trouve exercée sur le câble de transmission (3) par son extrémité extérieure (10), ladite
pièce de support (5) exerce un effort de traction sur le
câble de réaction (13) qui entraîne la poulie (11) en
actionnant l'organe de freinage (1B) se trouve actionné
sous l'effet de la traction exercée par le câble de transmission (3).

4. Dispositif selon la revendication 1, destiné à être
couplé à un dispositif de freins à câble de transmission
existant, caractérisé par une pièce de support (14) formée avec un passage pour le câble de transmission (3),
l'extrémité dudit câble se trouvant ancrée (en 15) sur
ladite pièce de support (14) après avoir enveloppé la
poulie de renvoi (11), dont l'axe est connecté (en 16) à
un câble de commande (17) des organes de freinage.

5. Dispositif selon la revendication 1, destiné à être
couplé à un dispositif de freins à câble de transmission
existant, caractérisé par un boîtier de support (14'),
constitué de deux pièces identiques (14A, 14B) formée
chacune avec un passage pour le câble de transmission,
respectivement de commande (3) et renfermant une double
poulie de renvoi (11') montée  sur un axe (18),
le câble de transmission relié à la commande de frein
(10) enveloppant les deux poulies (11A, 11B) l'une après
l'autre et se prolongeant par le câble de commande relié aux organes de freinage.

FIG. 1

FIG. 2

0185642

FIG. 3

10
3
4
6    5
3    1A    1B    11    13
2A    7    2B
1A    1B

FIG. 4

10
3
11    13
3
1B    1A
2A    7    2B
1A    1B

014

018564

FIG. 5

FIG. 6

FIG.7

0185642

FIG.8

**0185642**

Numero de la de...

RAPPORT DE RECHERCHE EUROPEENNE

Office européen
des brevets

EP 85 87 01...

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| X | FR-A- 916 858 (MELON) <br> * Page 2, lignes 12-60; figure 1 * | 1 | B 62 L 3/00 <br> B 62 L 1/12 <br> B 62 L 1/16 |
| A | | 4 | |
| | --- | | |
| A | FR-E- 76 617 (MANUFACTURE ARVERNOISE) <br> * Page 1, colonne de droite, ligne 4 - page 2, colonne de gauche, ligne 10; figures 1-4 * | 1,3,5 | |
| | --- | | |
| A | FR-A- 917 326 (VERONA) | | |
| | --- | | |
| A | FR-A- 984 467 (MERLIN) | | DOMAINES TECHNIQUES RECHERCHES (Int. Cl 4) |
| | --- | | |
| A | FR-A-1 346 166 (MANUFACTURE ARVERNOISE) | | B 62 L 1/00 <br> B 62 L 3/00 <br> B 62 K 23/00 |
| | --- | | |
| A | FR-A-2 322 774 (SHIMANO) | | |
| | ----- | | |

Le présent rapport de recherche a été établi pour toutes les revendications

| Lieu de la recherche <br> LA HAYE | Date d'achèvement de la recherche <br> 20-02-1986 | Examinateur <br> HARTEVELD C.D.H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82